# EUROPÄISCHE PATENTSCHRIFT

(11) **EP 1 249 148 B1**
(45) Veröffentlichungstag und Bekanntmachung des Hinweises auf die Patenterteilung: **15.12.2004**
(21) Anmeldenummer: 01911333.1
(22) Anmeldetag: 09.01.2001
(51) Int. Cl.: H04Q 7/38

(54) **VERFAHREN ZUR TEILNEHMERINITIERTEN AUTOMATISCHEN SUBSKRIBIERUNG**
METHOD FOR THE USER-INITIATED AUTOMATIC SUBSCRIPTION
PROCEDE D'ABONNEMENT AUTOMATIQUE INITIE PAR L'ABONNE

(30) Priorität: 20.01.2000 DE 10002216
(43) Veröffentlichungstag der Anmeldung: 16.10.2002
(73) Patentinhaber: T-Mobile Deutschland GmbH, 53227 Bonn (DE)
(72) Erfinder: KELLER, Walter, 40880 Ratingen (DE)
(74) Vertreter: Riebling, Günter, Dr.
(86) Internationale Anmeldenummer: PCT/DE2001/000037
(87) Internationale Veröffentlichungsnummer: WO 2001/054427

(56) Entgegenhaltungen:
- EP-A- 0 459 337
- WO-A-00/39988
- WO-A-98/46002
- DE-A- 19 752 970

## Beschreibung

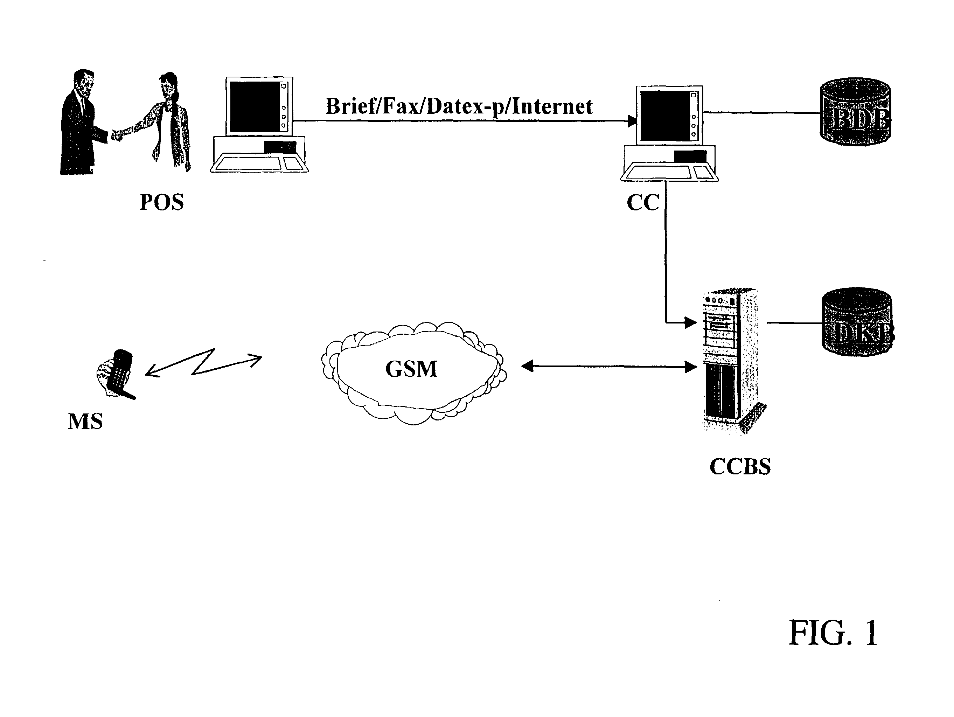

Die Erfindung betrifft ein Verfahren zur teilnehmerinitierten automatischen Subskribierung und Änderung von Vertragsverhältnissen, zur Administration bestehender Dienste sowie zur Freischaltung von Endgeräten in Telekommunikationsnetzen, beispielsweise zellulare Mobilfunknetze, für zumindest Bestandskunden auf der Basis von netz- und teilnehmerseitig bereits vorhandenen Zugangsdaten, wie Teilnehmerrufnummer und Zugangscodes. Die derzeitige Verfahrensweise zur Freischaltung einer Teilnehmereinrichtung erfolgt in zellularen Mobilfunknetzen, beispielsweise in einem GSM-Netz, wie nachfolgend beschrieben. Fig. 1 dient zur Verdeutlichung der Abläufe. Ein Kunde schließt in einer Verkaufsstelle (POS, Point of Sale) einen Vertrag über Art, Dauer und Bezahlung eines Teilnehmerverhältnisses mit einem Mobilfunknetzbetreiber ab (sog. Handy-Vertrag).

Gemäß den gesetzlichen Bestimmungen wird in diesem Zusammenhang eine Identitätsprüfung nach Vorlage des Personalausweises o.ä. durchgeführt, Dies erfolgt in der Regel bei Vertragsabschluss. Das Endgerät/Handy (soweit vereinbart) nimmt der Kunde direkt mit nach Hause. Er kann jedoch in der Regel noch nicht unmittelbar telefonieren.

Vom Point of Sale (POS) wird der Vertrag zum Mobilfunknetzbetreiber übermittelt. Dies erfolgt auf unterschiedlichen Wegen, wie Postzustellung, per Fax, per Internet, per Datex-P o. ä. Im Customer Care Bereich (CC) des Mobilfunknetzbetreibers erfolgt als nächster Schritt eine Vertragsprüfung. Hierbei werden bereits bestehende Vertragsverhältnisse, etwaig aufgetretener Missbrauch sowie unter optionalem Zugriff auf eine externe Bonitätsdatenbank (Schufa o.ä) die Bonität (Zahlungsfähigkeit und Zahlungsmoral) des potentiellen Kunden überprüft. Im positiven Fall (keine Vertragsablehnung) werden die erforderlichen Kundenstammdaten (alle für das Vertragsverhältnis erforderliche kennzeichnenden Daten) in der Kundendatenbank (KDB) des Customer Care & Billing Systems (CCBS) angelegt.
Danach wird der subskribierte Dienst freigeschaltet und der Kunde erhält in der Regel ein Begrüßungsschreiben mit Benutzerinformationen.

Jetzt kann der Kunde (GSM-Teilnehmer, Tln) sein neues Handy tatsächlich benutzen. Dabei existiert eine eindeutige Zuordnung seiner Teilnehmerrufnummer (MSISDN) zum bestehenden Vertragsverhältnis.
Meist besteht ein zusätzlicher Schutz für den Kunden zur Vermeidung unauthorisierter Nutzung bei Handy-Verlust in der Art, dass der Kunde ein zusätzliches Kennwort erhält, welches er zum Einschalten des Endgerätes benötigt (Personal Identification Number PIN). Zur Aktivierung besonderer Netzdienste, bei PIN-Verlust etc. erhält er meist zusätzlich einen weiteren PIN, den sog. PUK (PIN Unblocking Key). Letzterer ist gewöhnlich mehrstellig, wird zum normalen Betrieb nicht benötigt. Er soll an geschützter Stelle teilnehmerseitig für den Bedarfsfall archiviert werden.
Bei jedem Rufaufbau (bzw. beim Einschalten des Gerätes) werden die Kennungen, die auf der Handy-Karte (Subscriber Identication Modul SIM) abgespeichert sind, mit den Eingaben des Benutzers verifiziert und anschließend mit den entsprechenden Daten im GSM-Netz überprüft. Hierbei greift das Netz auf das CCBS und die KDB zurück. Dabei ist zur Beschleunigung der Prozedur ein Teil der netzseitigen Daten gewöhnlich im Home Location Register (HLR) gespeichert. Wenn der Teilnehmer Handy und PIN nicht weitergegeben hat, ist somit eine Identifikation des Endgerätes sowie des Teilnehmers bei jedem Gespräch möglich.

Die zweistufige Identifizierung und Bonitätsprüfung bei Vertragsschließung und -prüfung ist bei dieser Verfahrensweise erforderlich. Sie ist jedoch mit zeitaufwendigen und kostenintensiven manuellen Tätigkeiten verbunden und bringt erheblichen Nachteile für alle Beteiligten. Der Kunde muss persönlich beim POS anwesend sein, die Verkäufer benötigen Zeit für aufwendige Gespräche und führen eine Ausweiskontrolle durch. Der CC-Prozess ist ebenfalls mit erheblichem Aufwand belastet.

In dem Dokument WO-A-9846002 ist ein zellulares Mobilkommunikationssystem mit Möglichkeiten zur teilnehmerseitigen Programmierung der Subskriptionsdaten offenbart. Hierzu umfasst die Subskriptionsdatenbank drei separate Registerdatensätze, im einzelnen Teilnehmerregisterdatensätze, Subskriptionsregisterdatensätze und Endgeräteregisterdatensätze. Dadurch ist es einem Teilnehmer möglich, seiner persönlichen Telefonnummer wahlweise einen bestimmten Teilnehmerregisterdatensatz, Subskriptionsregisterdatensatz und Engeräteregisterdatensatz aus der Menge der in der Subskriptionsdatenbank vorgegebenen Registerdatensätze zuzuordnen. Die Einrichtung einer neuen, im Mobilkommunikationssystem bisher nicht registrierten Subskription mit Hilfe eines Kommunikationsendgeräts ist diesem Dokument nicht zu entnehmen.

Die DE-A-197 52 970 betrifft ein Verfahren zur Authorisierung eines Endgeräteanschlusses eines Telekommunikationsnetzes, bei dem der Anmeldevorgang des Teilnehmers direkt über das Endgerät durchgeführt wird. Im Rahmen des Anmeldevorgangs gibt der Teilnehmer seine persönlichen Daten über das Endgerät ein. Die Daten werden an eine Steuerstation weitergeleitet, welche die Daten überprüft und die weitere Anmeldungsbearbeitung durchführt. Zur Überprüfung der Daten tritt die Steuerstation mit außerhalb des Telekommunikationsnetzes befindlichen Institutionen, wie z. B. Bankinstituten, in Verbindung, um die Gültigkeit der Teilnehmerdaten zu überprüfen. Eine auf einem bestehenden Vertragsverhältnis zwischen Teilnehmer und Mobilfunknetzbetreiber basierende Überprüfung der Teilnehmerdaten findet nicht statt.

Die Dokumente EP-A-0 459 337 und WO-A-0039988 offenbaren Verfahren zur teilnehmerseitigen Änderung der Daten bestehender Vertragsverhältnisse über das Internet.

Bei den aus dem Stand der Technik bekannten Verfahren wird im Prinzip kein Unterschied gemacht, ob der Kunde bereits über ein Vertragsverhältnis mit dem Mobilfunknetzbetreiber verfügt, oder nicht.
Hier ist jedoch Optimierungspotential für den Fall vorhanden, wenn bereits ein entsprechendes Kundenverhältnis besteht. Dann sind bereits alle Anforderungen für FüV und
Bonitätsprüfung erfüllt und es reicht im Prinzip eine Verifikation der bisherigen Zahlungsmoral mit Anlage der zusätzlichen Datensätze in der Kundendatenbank aus.

Der vorliegenden Erfindung liegt die Aufgabe zugrunde, ein Verfahren anzugeben, auf dessen Basis eine weitgehend automatisierte Subskribierung und Freischaltung samt Identitätsfeststellung und Bonitätsprüfung von zusätzlichen Endgeräten/Diensten für Bestandskunden von zellularen Mobilfunknetzen realisiert wird.

Gelöst wird diese Aufgabe durch die kennzeichnenden Merkmale des Patentanspruchs 1.

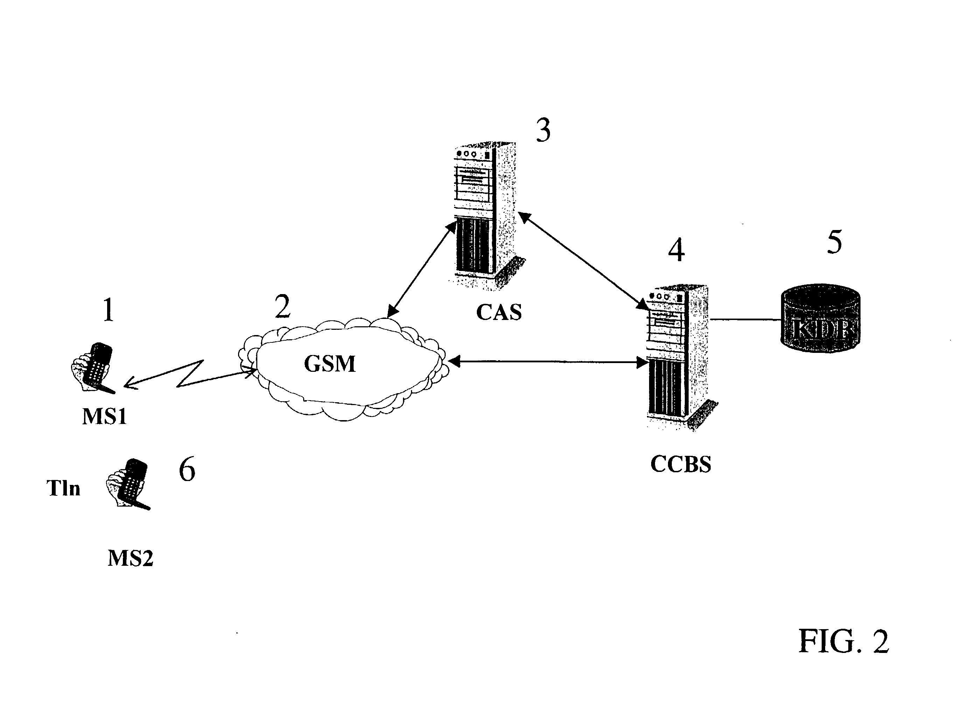

Die erfindungsgemäße Verfahrensweise wird nachfolgend unter Verwendung von Fig. 2 beispielhaft erläutert.

Ein Bestandskunde (Tln) eines zellularem GSM-Mobilfunknetzes, dessen Kundendaten bereits in der KDB (5) des Mobilfunknetzes gespeichert sind, möchte ein zusätzliches Vertragsverhältnis eingehen, bzw. benötigt ein weiteres Endgerät. Gründe dafür sind mannigfaltiger Art, beispielsweise der Fahrzeug- oder Bootseinbau eines Zweitgerätes, die temporäre Benutzung durch Familienangehörige, die Verwendung als Pool-Gerät in kleinen Unternehmen etc.

Der Kunde besitzt bereits das Endgerät MS1 (1).
Das Endgerät MS2 (6) erwirbt er durch Versand, durch freien Einkauf o.ä.
Unter Verwendung des Endgerätes MS1 sowie der Zugangsdaten, die teils in der SIM und teils netzseitig gespeichert sind, läuft eine Einwählprozedur ab, in deren Verlauf eine Verbindung durch das GSM-Netz (2) in den (3) hergestellt wird. Damit ist sichergestellt, dass die Identität des Kunden aufgrund der im GSM-Bereich üblichen Verfahren hinreichend bekannt ist.

Im weiteren Verlauf erfolgt eine Freischaltung des neu erworbenen Endgerätes samt neuer Karte, wobei unter anderem eine Sprachsteuerung oder auch andere Eingabeverfahren und - mittel zur Anwendung kommen., Dabei werden im Verlauf der Prozedur nach Aufforderung durch den netzseitigen Customer Subscription and Administration Server (CSAS) die kennzeichnenden Daten des Zweitgerätes, wie MSISDN, PIN, PUK o.ä. abgerufen, wobei verschiedene Eingabeverfahren und - medien zur Anwendungen kommen können, u.a auch die Tastatur. Nach Eingabe der entsprechenden vorgenannten Werte können dann menuegestützt die Vertragsart, Laufzeit und weitere Vertragsparameter gewählt werden.
Ein optional dem Zweitgerät zugeordneter alphanumerischer Name, wie beispielsweise Ehefrau, Sohn, Gerät 2, Kundendienst o.ä. dient zur einfachen späteren Unterscheidung der angefallenen Kosten im Gebührennachweis.

Der C-Server steht zur automatischen Verifikation des Vertragsverhältnisses mit dem CCBS (4) in Verbindung. Ein optional zusätzlicher Parameter in der Kundendatenbank (5) regelt die netzbetreiberseitige Zulässigkeit kundenseitiger Subskriptionen und Administrationen, wie in diesem Fall. Hieran erkennt bedarfsweise der CSAS, dass ein gewünschtes zusätzliches Vertragsverhältnis nicht möglich ist. Im letztgenannten Fall erfolgt eine entsprechende Ansage mit Verweis auf die CC-Rufnummer.

Ist der Subskribierungsvorgang abgeschlossen und teilnehmerseitig quittiert, erfolgt die automatische Anlage der zusätzlichen Kundendaten in der Kundendatenbank des CCBS sowie bedarfsweise in weiteren Netzeinrichtungen.
Ist auch dies erfolgt, wird die neue Karte automatisch freigeschaltet und der Kunde kann unmittelbar mit seinem Zweitgerät (6) unter Verwendung der zugehörigen neuen Karte kommunizieren. Eine postalische Bestätigung der Vertragserweiterung bzw. eine Faxzustellung erfolgt optional. Ebenfalls optional ist die Durchführung der Subskribierung bzw. Administation per Internet zum CAS vorzusehen.

### Zeichnungen und Anlagen

- Fig. 1: Herkömmliches Verfahren zur Teilnehmer-Freischaltung im Mobilfunkbereich
- Fig. 2: Teilnehmerinitiertes optimiertes automatisches Freischalteverfahren für Bestandskunden

### Abkürzungen

- CSAS: Customer Subscription and Administration Server
- GSM: Global System for Mobile Communications
- HLR: Home Location Register
- IP: Internet Protocol
- ISDN: Integrated Services Digital Network
- MS: Mobile Station
- MSISDN: Mobile Station ISDN
- PIN: Personal Identication Number
- PUK: PIN Unblocking Key
- SIM: Subscriber Identification Modul
- Tln: Teilnehmer

## Patentansprüche

1. Verfahren zur teilnehmerinitiierten automatischen Subskribierung und Änderung von Vertragsverhältnissen, zur Administration bestehender Dienste sowie zur Freischaltung von Endgeräten (MS2) in Mobilfunknetzen für Bestandskunden eines Mobilfunknetzbetreibers auf der Basis von netz- und teilnehmerseitig bereits vorhandenen Vertrags- und Zugangsdaten, wie Teilnehmerrufnummer und Zugangscodes, wob zur Freischaltung zusätzlicher Mobilfunkendgeräten (MS2) mit SIM-Karten für Bestandskunden mit bereits vorhandenem Vertragsverhältnis die Zugangsmechanismen des bestehenden Vertragsverhältnisses, d.h. eine vorhandene SIM-Karte und /oder ein Mobilfunkendgerät (MS 1) mit MSISDN und PIN, als Teilnehmeridentifikation zum teilnehmerseitigen Zugang in eine entsprechende Subskribierungseinrichtung (Customer Subscription and Administration Server) CSAS genutzt werden, und eine Erweiterung des bestehenden Vertragsverhältnisses um die Kenndaten des neuen Vertragsverhältnisses (MSISDN, PIN, PUK etc.) erfolgt, wobei unter Verwendung des Endgerätes (MS1) sowie der Zugangsdaten, die teils in der SIM-Karte und teils netzseitig gespeichert sind, eine Einwählprozedur durchgeführt wird, in deren Verlauf eine Verbindung durch das GSM-Netz (2) mit dem CSAS (3) hergestellt und die Identität des Teilnehmers geprüft wird, wobei eine automatische Anlage der zusätzlichen Kundendaten in einer Kundendatenbank des Customer Care und Billing System (CCBS) erfolgt, die neue SIM-Karte automatisch freigeschaltet wird und der Teilnehmer unmittelbar mit seinem neuen Endgerät MS2 (6) unter Verwendung der zugehörigen neuen SIM-Karte kommunizieren kann.

2. Verfahren gemäß Anspruch 1, **dadurch gekennzeichnet, dass** zur Erweiterung der bestehenden Vertragsdaten um die Kenndaten des neuen Vertragsverhältnisses eine Menügesteuerte Benutzerführung durch das CSAS erfolgt, wobei die Eingabe der Daten mittels bekannter Eingabetechniken (taktil, durch akustisches Signal, durch Infrarotsignal u. ä.)und die Benutzerführung unter Verwendung bekannter technischer Ausgabemittel (optische Anzeige, Sprachausgabe o. ä.) erfolgt.

3. Verfahren gemäß mindestens einem der Ansprüche 1 oder 2, **dadurch gekennzeichnet, dass** der CSAS zur Authentisierung des rufenden Teilnehmers, zur Autorisierung/Verifikation der, durch den betreffenden Teilnehmer subskribierbaren und administrierbaren Zusatzverträge, Änderungen und Dienstleistungen, sowie zur Abspeicherung neu subskribierter oder geänderter Verträge und Dienstleistungen mit den entsprechenden Datenbanken des Telekommunikationsnetzes, wie beispielsweise CCBS, KDB und HLR, in Verbindung steht.

4. Verfahren gemäß mindestens einem der vorstehenden Ansprüche 1 bis 3, **dadurch gekennzeichnet, dass** der CSAS-Zugang über Internet-Protokoll und grafische Benutzeroberfläche erfolgt, wobei der Zugang über das betreffende Telekommunikationsnetz unter Nutzung der vorhandenen netzspezifischen Zugangs- und Authentisierungsprozeduren sowie optional zusätzlicher Schutzmechanismen wie Einmalpasswort etc. erfolgt.

5. Verfahren gemäß mindestens einem der Ansprüche 1 bis 4, **dadurch gekennzeichnet, dass** in einem alternativen Realisierungsverfahren der CSAS-Zugang optional unter Verwendung von Internet-Protokoll und grafischer Benutzeroberfläche über das öffentliche Internet erfolgt. wobei wegen des Fehlens von netzspezifischen Zugangs- und Authentisierungsprozeduren die Teilnehmerauthentisierung stellvertretend mittels zusätzlicher Zugangsberechtigungen erfolgt, die zwischen Teilnehmer und Telekommunikationsnetzbetreiber für solche Fälle speziell vorgesehen werden (Zugangscode, Einmalpasswörter etc.).

6. Verfahren gemäß mindestens einem der Ansprüche 1 bis 5, **dadurch gekennzeichnet, dass** die KDB des Telekommunikationsnetzes optional um die notwendigen Datensätze erweitert wird, die zur Steuerung der benutzerinitiierten automatischen Subskribierungs- und Administrationsvorgänge (ASA) erforderlich sind, wie beispielsweise das Verbot der ASA, Umfang, Limits etc. sowie bonitätskennzeichnende interne Parameter etc. des Netzbetreibers.

7. Verfahren gemäß mindestens einem der Ansprüche 1 bis 6, **dadurch gekennzeichnet, dass** optional alphanumerische Aliasnamen für zusätzliche SIM-Karten /Endgeräte definiert werden können, die u.a. zur Gerätekennzeichnung und Transparenz der Fernmelderechnung dienen.

## Claims

1. Method for subscriber-initiated automatic subscription and amendment of contracts, for the administration of existing services and for the clearance of terminals (MS2) in mobile telephone networks for existing customers of a mobile telephone network operator on the basis of contract and access data already available on the network and subscriber sides, such as subscriber telephone number and access codes, wherein, for the clearance of additional mobile telephone terminals (MS2) with SIM cards for existing customers who already have a contract, the access mechanisms of the existing contract, i.e. an existing SIM card and/or a mobile telephone terminal (MS1) with MSISDN and PIN, are used as subscriber identification for subscriber access to a corresponding subscription device (customer subscription and administration server) CSAS, and an expansion of the existing contract by the characteristic data of the new contract (MSISDN, PIN, PUK, etc.) is effected, wherein, using the terminal (MS1) and the access data which are stored partly in the SIM card and partly on the network side, a dial-up procedure is performed, in the course of which a connection to the CSAS (3) is made by the GSM network (2) and the identity of the subscriber is checked, wherein automatic creation of the additional customer data is effected in a customer data bank of the customer care and billing system (CCBS), the new SIM card is automatically cleared, and the subscriber can communicate directly with his new terminal MS2 (6) using the associated new SIM card.

2. Method according to claim 1, **characterised in that**, for expansion of the existing contract data by the characteristic data of the new contract, menu-controlled user guidance is effected by the CSAS, wherein entry of the data is effected by means of known entry techniques (tactile, by acoustic signal, by infrared signal, etc.) and user guidance is effected using known technical output means (visual display, voice output, etc.).

3. Method according to one or more of claims 1 or 2, **characterised in that**, for authentication of the calling subscriber, for authorisation/verification of the additional contracts, amendments and services which can be subscribed and administered by the subscriber concerned, and for the storage of newly subscribed or amended contracts and services, the CSAS is connected to the corresponding data banks of the telecommunications network, for example, CCBS, CDB and HLR.

4. Method according to one or more of the above claims 1 to 3, **characterised in that** CSAS access is effected via internet protocol and graphic user interface, wherein access is effected via the telecommunications network concerned using the existing network-specific access and authentication procedures as well as optionally additional protective mechanisms such as unique password, etc.

5. Method according to one or more of claims 1 to 4, **characterised in that** in an alternative method of accomplishment CSAS access is effected via the public internet, optionally using internet protocol and graphic user interface, wherein, due to the absence of network-specific access and authentication procedures, subscriber authentication is effected as a substitute by means of additional access authorisation operations which are specially provided for such cases between subscriber and telecommunications network operator (access code, unique passwords, etc.).

6. Method according to one or more of claims 1 to 5, **characterised in that** the customer data bank (CDB) of the telecommunications network is optionally expanded by the necessary data records which are required for control of the user-initiated automatic subscription and administration (ASA) operations, for example, barring of ASA, scope, limits, etc., as well as status-distinguishing internal parameters, etc. of the network operator.

7. Method according to one or more of claims 1 to 6, **characterised in that** optionally alphanumeric alias names can be defined for additional SIM cards/terminals, which inter alia serve for terminal identification and transparency of the telecommunications account.

## Revendications

1. Procédé pour un abonnement automatique et une modification automatique de conditions de contrat à l'initiative de l'abonné, pour la gestion de services existants et pour la libération de terminaux (MS2) dans des réseaux radiotéléphoniques mobiles pour des clients d'un exploitant d'un réseau mobile sur la base de données de contrat et d'accès déjà présentes côté réseau et côté abonné, telles qu'un numéro d'appel, des codes d'accès, selon lequel pour libérer des terminaux mobiles supplémentaires (MS2) avec des cartes SIM pour des clients avec un contrat déjà existant, les mécanismes d'accès dudit contrat existant, c'est-à-dire une carte SIM existante et/ou un terminal mobile (MS1) avec un MSISDN (numéro RNIS de station mobile) et un PIN, sont utilisés comme identification d'abonné pour l'accès, côté abonné, à un dispositif d'abonnement correspondant (serveur d'abonnement et de gestion par le client, CSAS), et les conditions de contrat existantes sont étendues avec les données d'identification des nouvelles conditions de contrat (MSISDN, PIN, PUK (clé de déblocage de PIN), etc.), étant précisé qu'à l'aide du terminal (MS1) et des données d'accès qui sont mémorisées en partie dans la carte SIM et en partie côté réseau, on effectue une procédure d'entrée au cours de laquelle une liaison est établie par le réseau GSM (2) avec le serveur CSAS (3) et l'identité de l'abonné est vérifiée, et étant précisé qu'une installation automatique des données de client supplémentaires dans une banque de données de client du système de clientèle et de facturation (CCBS) a lieu, que la nouvelle carte SIM est libérée automatiquement et que l'abonné peut communiquer immédiatement avec son nouveau terminal MS2 (6) en utilisant la nouvelle carte SIM correspondante.

2. Procédé selon la revendication 1, **caractérisé en ce que** pour étendre les données de contrat existantes avec les données d'identification des nouvelles conditions de contrat, l'utilisateur est guidé par le serveur CSAS à l'aide d'une commande par menu, l'entrée des données se faisant à l'aide de techniques d'entrée connues (tactile, par signal acoustique, par signal infrarouge, etc.) et le guidage de l'utilisateur se faisant à l'aide de moyens techniques de sortie connus (affichage optique, sortie vocale, etc.).

3. Procédé selon l'une au moins des revendications 1 ou 2, **caractérisé en ce que** le serveur CSAS, pour authentifier l'abonné appelant, pour autoriser/vérifier les contrats supplémentaires aptes à être souscrits et aptes à être gérés par l'abonné concerné ainsi que les modifications et les prestations de services, et pour mémoriser des contrats et services souscrits ou modifiés, est en liaison avec les banques de données correspondantes du réseau de télécommunication comme par exemple le système CCBS, la banque de données de clients et l'enregistreur de localisation nominal HLR.

4. Procédé selon l'une au moins des revendications 1 à 3 précédentes, **caractérisé en ce que** l'accès au serveur CSAS se fait par l'intermédiaire du protocole Internet et d'une surface d'utilisateur graphique, l'accès par l'intermédiaire du réseau de télécommunication concerné se faisant à l'aide des procédures d'accès et d'authentification existantes spécifiques du réseau et, à titre optionnel, à l'aide de mécanismes de protection supplémentaires tels qu'un mot de passe à utiliser une seule fois, etc.

5. Procédé selon l'une au moins des revendications 1 à 4, **caractérisé en ce que** selon un autre procédé de réalisation, l'accès au serveur CSAS se fait à titre optionnel à l'aide du protocole Internet et d'une surface d'utilisation graphique par l'intermédiaire de l'Internet public, étant précisé qu'en raison de l'absence de procédures d'accès et d'authentification spécifiques du réseau, l'authentification de l'abonné de fait à titre de remplacement à l'aide d'autorisations d'accès supplémentaires qui sont prévues spécialement pour de tels cas entre l'abonné et l'exploitant du réseau de télécommunication (code d'accès, mots de passe à utiliser une seule fois, etc.).

6. Procédé selon l'une au moins des revendications 1 à 5, **caractérisé en ce que** la banque de données de clients du réseau de télécommunication est étendue à titre optionnel avec les enregistrements qui sont nécessaires à la commande des opérations automatiques d'abonnement et de gestion (ASA) à l'initiative de l'utilisateur, comme par exemple l'interdiction de ces opérations, l'étendue, les limitations, etc., et des paramètres internes caractérisant la solvabilité, etc., de l'exploitant du réseau.

7. Procédé selon l'une au moins des revendications 1 à 6, **caractérisé en ce qu'**à titre optionnel, des pseudonymes alphanumériques pour des cartes SIM/terminaux supplémentaires peuvent être définis et servent entre autres à l'identification des appareils et à la transparence de la facture de télécommunication.
